# DEMANDE DE BREVET EUROPEEN

(11) **EP 1 215 067 A1**
(43) Date de publication de la demande: **19.06.2002**
(21) Numéro de dépôt: 01403196.7
(22) Date de dépôt: 11.12.2001
(51) Int. Cl.: B60J 10/00, B60J 10/04

(54) **Procédé de fabrication d'un profile d'étanchéité et profile obtenu par ce procédé**

(30) Priorité: 13.12.2000 FR 0016217
(71) Demandeur: HUTCHINSON, 75008 Paris (FR)
(72) Inventeur: Roux, Sébastien, 45200 Montargis (FR)
(74) Mandataire: Corizzi, Valérie

(57) **Abrégé**

L'invention concerne un procédé de fabrication d'un profilé d'étanchéité, en particulier d'un joint ou d'un lécheur de véhicule automobile, caractérisé ce qu'il consiste :
a) préalablement à la fabrication du profilé, à définir quelles sont ses parties dynamiquement fonctionnelle (B) et non fonctionnelle (A), puis
b) à fabriquer, par coextrusion, lesdites parties dynamiquement fonctionnelle (B) et non fonctionnelle (A) en des matériaux polymères différents l'un de l'autre, ledit matériau constitutif de la partie dynamiquement non fonctionnelle (A) présentant un module de flexion inférieur à une valeur de l'ordre de 100 NPa et étant résistant à la déformation jusqu'à une température d'au moins 90°C environ.

L'invention concerne également un profilé d'étanchéité obtenu par ce procédé de fabrication.

## Description

L'invention se rapporte à un procédé de fabrication d'un profilé d'étanchéité, en particulier d'un joint propre à former une coulisse ou un lécheur, et au profilé obtenu par ce procédé.

D'une manière générale et dans de nombreux domaines de l'industrie, certains joints d'étanchéité doivent être souples pour pouvoir épouser des contours de forme galbée. Dans ce but, ils sont le plus souvent réalisés en élastomère (tel qu'un caoutchouc naturel ou un EPDM) ou en thermoplastique élastomère (par exemple en PP/EPDM, en SEBS, en PVC/NBR ou leurs dérivés), comme décrit notamment dans le Brevet français publié sous le numéro 2 667 016.

Les matériaux utilisés à ce jour dans la fabrication des profilés d'étanchéité présentent néanmoins l'inconvénient d'impliquer un coût matière élevé. En outre, l'utilisation d'élastomères nécessite de vulcaniser le profilé obtenu, procédé qui implique un coût de production élevé. Or, la fabrication de pièces et produits à des prix compétitifs est un impératif pour les industriels, impératif particulièrement aigu dans l'industrie automobile.

Un but de l'invention est donc de pourvoir à un profilé d'étanchéité dont le prix de revient soit inférieur à celui des profilés existant actuellement, étant entendu que le matériau constitutif du profilé doit être suffisamment souple de façon à pouvoir être galbé, dans le cas d'un profilé d'étanchéité non droit.

L'invention a donc pour objet un procédé de fabrication d'un profilé d'étanchéité, en particulier d'un joint propre à former une coulisse ou un lécheur, ce procédé étant caractérisé ce qu'il consiste :
a) préalablement à la fabrication du profilé, à définir quelles sont ses parties dynamiquement fonctionnelle et non fonctionnelle, puis
b) à fabriquer, par coextrusion, lesdites parties dynamiquement fonctionnelle et non fonctionnelle en des matériaux polymères différents l'un de l'autre, ledit matériau constitutif de la partie dynamiquement non fonctionnelle présentant un module de flexion inférieur à une valeur de l'ordre de 100 MPa et étant résistant à la déformation jusqu'à une température d'au moins 90°C environ.

Au sens de la présente invention, on entend par « partie dynamiquement fonctionnelle » la partie du profilé qui doit présenter, notamment, de bonnes propriétés d'élasticité, de résistance au fluage et de déformation rémanente à la compression. Dans le cas d'un profilé étant utilisé en tant que joint d'étanchéité, cette partie correspond notamment aux lèvres d'étanchéité du joint.

Par opposition, on entend par « partie dynamiquement non fonctionnelle » la partie du profilé qui, outre de présenter une souplesse qui lui permette d'épouser les contours du support auquel elle est fixée, ne nécessite pas de performances mécaniques particulières en ce qui concerne notamment l'élasticité, la résistance au fluage et la déformation rémanente à la compression.

Dans le procédé conforme à l'invention, la partie dynamiquement non fonctionnelle peut comprendre, avantageusement, un ou plusieurs matériaux choisis parmi les thermoplastiques et les thermoplastiques élastomères.

L'invention a également pour objet un profilé d'étanchéité, caractérisé en ce qu'il comprend au moins une partie dynamiquement fonctionnelle, réalisée à partir d'un premier matériau polymère, et au moins une partie dynamiquement non fonctionnelle, qui est réalisée à partir d'un second matériau polymère différent dudit premier matériau, ledit second matériau présentant un module de flexion inférieur à une valeur de l'ordre de 100 MPa et une résistance à la déformation jusqu'à une température d'au moins 90°C environ, ledit profilé étant obtenu par le procédé de fabrication tel que défini ci-dessus.

Un tel profilé peut notamment consister en une coulisse ou en un lécheur de vitre, par exemple pour une vitre coulissante de véhicule automobile. Toutefois, il est bien entendu qu'il peut s'agir de tout type de profilé, utilisable par exemple dans le bâtiment ou dans l'industrie automobile et en particulier pour des applications d'étanchéité, tel qu'un joint de porte, de coffre, de capot, de pare-brise, de lunette arrière, un lécheur intérieur et/ou extérieur, etc... Il peut également s'agir d'un joint d'habillage, c'est-à-dire d'un profilé qui n'est pas destiné à remplir une fonction d'étanchéité.

Le profilé conforme à l'invention présente notamment l'avantage d'impliquer un coût de fabrication moins élevé que les profilés connus actuellement, du fait de l'utilisation, dans la partie du profilé définie comme étant dynamiquement non fonctionnelle, d'un matériau différent de celui constitutif de la partie dynamiquement fonctionnelle, ledit matériau étant spécifiquement sélectionné pour son coût matière et son coût de transformation faibles, en comparaison avec ceux des matériaux classiquement utilisés pour la fabrication de profilés.

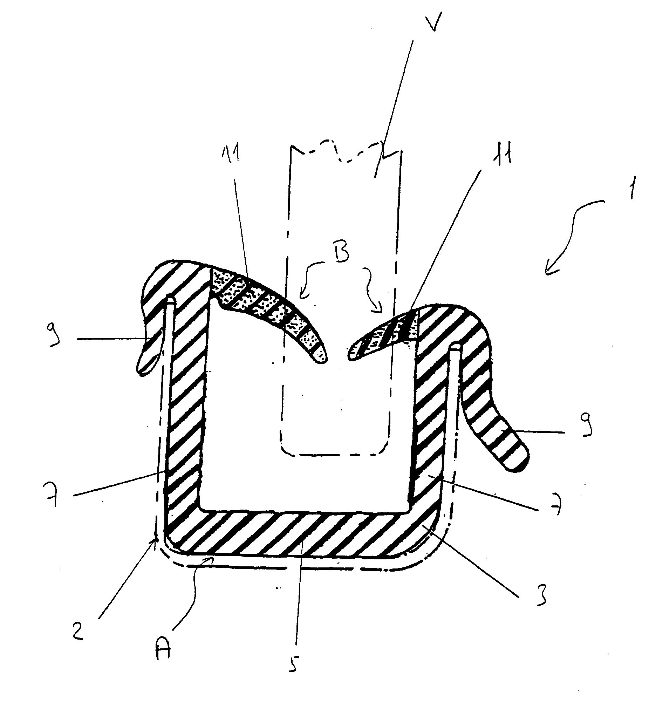

D'autres avantages, caractéristiques et détails de l'invention ressortiront du complément de description qui va suivre en référence au dessin annexé, donné à titre d'exemple et qui est une vue en coupe d'un profilé d'étanchéité pour illustrer une mise en oeuvre du procédé selon l'invention.

Le profilé d'étanchéité 1 illustré sur le dessin est une section d'un brin de coulisse qui vient se fixer sur les parties supérieure et latérales de l'encadrement 2 d'une baie de vitre coulissante V pour véhicule automobile, alors qu'un joint ou lécheur (non représenté) vient se fixer sur la partie inférieure dudit encadrement.

D'une manière générale, un joint formant une coulisse ou un lécheur présente au moins deux parties, à savoir une première partie destinée à assurer une fonction de fixation du joint et une seconde partie destinée à venir au contact de la vitre V.

Selon l'exemple illustré sur le dessin, le joint d'étanchéité 1 formant coulisse comprend une partie fixation A constituée d'un corps profilé 3 à section droite ou galbée en forme de U avec une base 5 et deux ailes 7. Le corps 3 est apte à s'encastrer dans une gorge (non représentée) formée dans une feuillure de l'encadrement 2 de la baie de vitre coulissante. Des lèvres externes de retenue 9 sont prévues sur les faces extérieures des deux ailes 7 pour augmenter la tenue à l'arrachement du corps 3.

Le joint d'étanchéité 1 comprend également une partie étanchéité B constituée de deux lèvres internes 11 qui sont situées vers les extrémités supérieures des deux ailes 7, sensiblement en vis-à-vis l'une de l'autre et aptes à venir en contact avec la vitre V et de part et d'autre de celle-ci.

Selon l'invention, la partie fixation A du profilé 1 est une partie dynamiquement non fonctionnelle, alors que sa partie étanchéité B est une partie dynamiquement fonctionnelle.

Le corps 3 du profilé 1 et les lèvres externes de retenue 9, qui forment la partie dynamiquement non fonctionnelle du profilé 1, sont avantageusement réalisés en un matériau compatible, d'un point de vue chimique, avec celui utilisé pour former les lèvres d'étanchéité 11. Conformément à l'invention, ce matériau présente un module de flexion inférieur à une valeur de l'ordre de 100 MPa (mesurée selon la norme ISO 178) et est résistant à la déformation jusqu'à une température d'au moins 90°C environ.

Un matériau convenable pour la réalisation de la partie dynamiquement non fonctionnelle du profilé peut consister en un matériau polyoléfinique non vulcanisé et/ou en un thermoplastique élastomère.

A titre d'exemples, le matériau polyoléfinique non vulcanisé utilisable pour former la partie dynamiquement non fonctionnelle du profilé peut être choisi parmi un ou plusieurs des matériaux suivants :
. un homopolymère de polypropylène (PP) comprenant au moins un agent plastifiant,
. un copolymère de polypropylène, par exemple un copolymère de polypropylène et de polyéthylène (PP/PE),
. un polyéthylène (PE), et
. un mélange de polypropylène et de polyéthylène.

Tout type de polyéthylène peut être utilisé, par exemple un PEbd (polyéthylène basse densité), un Pehd (polyéthylène haute densité) ou un Pelld (« linear low density polyethylene »).

Quant au thermoplastique élastomère utilisable, ce dernier peut être choisi parmi un ou plusieurs des matériaux suivants :
. un copolymère de polypropylène, de polyéthylène et d'élastomère éthylène/propylène (PP/PE/EPR),
. un mélange d'un copolymère de PP/PE et d'un thermoplastique élastomère,
. un copolymère de PP/PE et d'un thermoplastique élastomère, et
. un Végaprène®.

A titre d'exemples de matériaux utilisables, commercialisés sous la dénomination Végaprène®, on peut citer les matériaux décrits dans le document WO 97/44390, qui comprennent au moins un élastomère à polymérisation par un catalyseur métallocène et une polyoléfine greffée.

Par « mélange d'un copolymère de PP/PE et d'un thermoplastique élastomère », on entend un mélange physique dudit copolymère de PP/PE avec un thermoplastique élastomère quelconque, choisi parmi l'ensemble des thermoplastiques élastomères connus de l'Homme de l'art. De façon similaire, par « copolymère de PP/PE et d'un thermoplastique élastomère », on entend un copolymère comprenant, à l'intérieur de la même chaîne macromoléculaire, à la fois des motifs du copolymère de PP/PE et des motifs d'un thermoplastique élastomère quelconque, choisi parmi l'ensemble des thermoplastiques élastomères connus de l'Homme de l'art.

Parmi les thermoplastiques élastomères cités ci-dessus, l'utilisation d'un copolymère de polypropylène, de polyéthylène et d'élastomère éthylène/propylène (PP/PE/EPR) est préférée.

Les lèvres d'étanchéité internes 11, qui forment la partie dynamiquement fonctionnelle du profilé 1, sont en effet destinées à assurer l'étanchéité au niveau de la vitre du véhicule automobile et doivent présenter, notamment, de bonnes propriétés d'élasticité, de résistance au fluage et de déformation rémanente à la compression. Elles peuvent être réalisées en tout matériau connu de l'Homme de l'art pour les propriétés sus-mentionnées et couramment utilisé dans la fabrication de lèvres d'étanchéité. A titre d'exemples, les lèvres d'étanchéité 11 peuvent être réalisées en un thermoplastique élastomère de type PP/EPDM ou de type SEBS.

Les surfaces des lèvres d'étanchéité 11 destinées à venir en contact avec la vitre du véhicule automobile peuvent être recouvertes d'une couche de polyéthylène réticulé (par exemple à l'aide d'un silane), afin de permettre un meilleur glissement de la vitre avec lesdites lèvres, comme cela est décrit, notamment, dans le document FR-A-2 730 783.

Le profilé représenté sur le dessin est avantageusement fabriqué par le procédé qui consiste :
a) préalablement à la fabrication du profilé, à définir quelles sont ses parties dynamiquement fonctionnelle B et non fonctionnelle A, puis
b) à fabriquer, par coextrusion à l'aide d'une filière de forme appropriée, lesdites parties dynamiquement fonctionnelle B et non fonctionnelle A en des matériaux polymères différents l'un de l'autre, ledit matériau constitutif de la partie dynamiquement non fonctionnelle A présentant un module de flexion inférieur à une valeur de l'ordre de 100 MPa et étant résistant à la déformation jusqu'à une température d'au moins 90°C environ.

Au cours de l'étape a) du procédé décrit ci-dessus, on définit deux parties dynamiquement fonctionnelles et une partie dynamiquement non fonctionnelle au sein du profilé, qui correspondent respectivement aux lèvres d'étanchéité 11 et au corps 3 avec les lèvres de retenue 9. La définition de ces parties est réalisée de façon à les démarquer les unes des autres d'une manière compatible avec une fabrication par coextrusion.

Au cours de l'étape b) du procédé décrit ci-dessus, on entend par « différents » des matériaux dont les structures chimiques ne sont pas strictement les mêmes, bien que ces matériaux soient susceptibles d'appartenir à une même famille chimique de polymères. De tels matériaux sont tels que décrits ci-dessus.

De façon particulièrement avantageuse, aucune étape de vulcanisation n'est nécessaire après la mise en forme du profilé.

## Revendications

1. Procédé de fabrication d'un profilé d'étanchéité, en particulier d'un joint propre à former une coulisse ou un lécheur, caractérisé ce qu'il consiste :
a) préalablement à la fabrication du profilé, à définir quelles sont ses parties dynamiquement fonctionnelle (B) et non fonctionnelle (A), puis
b) à fabriquer, par coextrusion, lesdites parties dynamiquement fonctionnelle (B) et non fonctionnelle (A) en des matériaux polymères différents l'un de l'autre, ledit matériau constitutif de la partie dynamiquement non fonctionnelle (A) présentant un module de flexion inférieur à une valeur de l'ordre de 100 MPa et étant résistant à la déformation jusqu'à une température d'au moins 90°C environ.

2. Procédé selon la revendication 1, **caractérisé en ce qu'**il consiste à réaliser la partie dynamiquement non fonctionnelle (A) en un ou plusieurs matériaux choisis parmi les thermoplastiques et les thermoplastiques élastomères.

3. Procédé selon la revendication 2, **caractérisé en ce qu'**il consiste à choisir un thermoplastique tel qu'un matériau polyoléfinique non vulcanisé.

4. Procédé selon la revendication 3, **caractérisé en ce qu'**il consiste à choisir un matériau polyoléfinique non vulcanisé parmi un ou plusieurs des matériaux suivants : un homopolymère de polypropylène (PP) comprenant au moins un agent plastifiant, un copolymère de polypropylène, un polyéthylène (PE), et un mélange de polypropylène et de polyéthylène.

5. Procédé selon la revendication 2, **caractérisé en ce qu'**il consiste à choisir ledit thermoplastique élastomère parmi un ou plusieurs des matériaux suivants : un copolymère de polypropylène, de polyéthylène et d'élastomère éthylène/propylène (PP/PE/EPR), un mélange d'un copolymère de PP/PE et d'un thermoplastique élastomère, un copolymère de PP/PE et d'un thermoplastique élastomère, et un Végaprène®.

6. Profilé d'étanchéité, **caractérisé en ce qu'**il comprend au moins une partie dynamiquement fonctionnelle (B), réalisée à partir d'un premier matériau polymère, et au moins une partie dynamiquement non fonctionnelle (A), qui est réalisée à partir d'un second matériau polymère différent dudit premier matériau, ledit second matériau présentant un module de flexion inférieur à une valeur de l'ordre de 100 MPa et une résistance à la déformation jusqu'à une température d'au moins 90°C environ, ledit profilé étant obtenu par le procédé de fabrication selon l'une quelconque des revendications précédentes.

7. Profilé selon la revendication 6, **caractérisé en ce qu'**il s'agit d'une coulisse pour baie de vitre coulissante de véhicule automobile.

8. Profilé selon la revendication 6, **caractérisé en ce qu'**il s'agit d'un lécheur pour baie de vitre coulissante de véhicule automobile.
